# EUROPEAN PATENT APPLICATION

(11) **EP 3 872 343 A1**
(43) Date of publication of application: **01.09.2021**
(21) Application number: 19877210.5
(22) Date of filing: 11.09.2019
(51) Int. Cl.: F04B 27/18, F16K 31/06

(54) **CONTROL VALVE FOR VARIABLE DISPLACEMENT COMPRESSOR**

(30) Priority: 22.10.2018 JP 2018198524
(71) Applicant: Fujikoki Corporation, Tokyo 158-0082 (JP)
(72) Inventor: ITOH, Masaharu, Tokyo 158-0082 (JP); ASANO, Hisashi, Tokyo 158-0082 (JP); SHIMADA, Kenki, Tokyo 158-0082 (JP); SAKAMOTO, Takashi, Tokyo 158-0082 (JP); KUME, Yoshiyuki, Tokyo 158-0082 (JP)
(74) Representative: Ter Meer Steinmeister & Partner
(86) International application number: PCT/JP2019/035640
(87) International publication number: WO 2020/084941

(57) **Abstract**

Provided is a variable-capacity compressor control valve that can effectively reduce sliding resistance while preventing Pd-Ps leakage and the inclination of a valve element, thus increasing controllability and operation stability, and can also avoid operation failures or troubles caused by foreign matter. A sliding portion 15e of a main valve element 15 that is slidaly fitted and inserted into a guide hole 19 provided in a valve body 20 includes an upper small-clearance portion 61 and a lower small-clearance portion 62 in the opposite ends in a vertical direction thereof and a large-clearance portion 71 between the upper small-clearance portion 61 and the lower small-clearance portion 62. The upper small-clearance portion 61 and the lower small-clearance portion 62 each has a diameter Dx and a vertical length that is equal to or larger than a predetermined length. The large-clearance portion 71 has a diameter Dy that is smaller than the Dx and a vertical length of 1 mm or larger.

## Description

### Technical Field

The present invention relates a variable-capacity compressor control valve for use in an automotive air conditioner, for example.

### Background Art

Usually, a control valve for a variable-capacity compressor used for an automotive air conditioner, for example, is adapted to receive a discharge pressure Pd from a discharge chamber of the compressor and control a pressure Pc in a crank chamber by controlling the discharge pressure Pd in accordance with a suction pressure Ps of the compressor. Typically, such a control valve has, as seen in Patent Literature 1, 2 below, for example, a valve body that includes a valve chamber with a valve orifice, a Ps inlet/outlet port communicating with the suction chamber of the compressor, a Pd introduction port arranged upstream of the valve orifice and communicating with the discharge chamber of the compressor, and a Pc inlet/outlet port arranged downstream of the valve orifice and communicating with the crank chamber of the compressor; a valve element for opening or closing the valve orifice; an electromagnetic actuator including a plunger, the electromagnetic actuator being adapted to move the valve element in the direction to open or close the valve orifice; a pressure-sensitive chamber adapted to receive the suction pressure Ps from the compressor via the Ps inlet/outlet port; and a pressure-sensitive reaction member, such as a bellows device, adapted to urge the valve element in the direction to open or close the valve orifice in accordance with the pressure in the pressure-sensitive chamber.

Hereinafter, a conventional example of the control valve having the above configuration will be briefly described with reference to Fig. 6 and Fig. 7 (see also Patent Literature 1, 2 below).

The control valve 1' of the conventional example illustrated in the drawings includes a valve body 20 with a valve orifice 22, a valve element 10 including a main valve element 15 for opening or closing the valve orifice 22 and a sub valve element 17, an electromagnetic actuator 30 for moving the valve element 10 in the direction to open or close the valve orifice (i.e., in the vertical direction), and a bellows device 40 as a pressure-sensitive reaction member.

The electromagnetic actuator 30 includes a bobbin 38, an energization coil 32 wound around the bobbin 38, a stator 33 and an attractor 34 arranged on the inner periphery side of the coil 32, a guide pipe 35 with its upper end joined by welding to the outer periphery of the lower end (i.e., a step portion) of the stator 33 and the attractor 34, a closed-bottomed cylindrical plunger 37 arranged such that it is vertically slidable on the inner periphery side of the guide pipe 35 below the attractor 34, a cylindrical housing 30c externally arranged around the coil 32, a connector head 31 attached to the upper side of the housing 30c with interposed therebetween an attachment plate 39, and a holder 29 disposed between the lower end of the housing 30c and the lower end of the guide pipe 35 and adapted to fix them to the upper portion of the valve body 20.

A pressure-sensitive chamber 45, which is adapted to receive a suction pressure Ps in a compressor, is formed between a stator 30d on the inner periphery side of the upper portion of the stator 33 and the attractor 34. The pressure-sensitive chamber 45 has arranged therein the bellows device 40 as the pressure-sensitive reaction member that includes bellows 41, a downwardly projecting upper stopper 42, a downwardly recessed lower stopper 43, and a compression coil spring 44. Further, a stepped, bar-like pushrod 46, which is a thrust transmitting member, is disposed along the axis O below the bellows device 40. An upper small-diameter portion of the pushrod 46 is fitted and inserted into a recess portion of the lower stopper 43 and thus is supported therein. An intermediate trunk portion of the pushrod 46 is slidaly inserted into an insertion through-hole of the attractor 34. A lower small-diameter portion of the pushrod 46 is inserted into a fit-insertion hole of the sub valve element 17 with a recessed cross-section described below.

The sub valve element 17 with the recessed cross-section, which has the fit-insertion hole, is securely inserted into the plunger 37 by press fitting, for example. The sub valve element 17 is fitted into the plunger 37 such that the upper end of the sub valve element 17 is aligned with the upper end of the plunger 37, while the lower end of the sub valve element 17 is spaced apart from the bottom of the plunger 37.

A plunger spring (i.e., a valve-opening spring) 47, which is a compression coil spring adapted to urge the sub valve element 17 and the plunger 37 downward (i.e., in the direction to open the valve), is provided in a compressed state between the pushrod 46 and the sub valve element 17. With the plunger spring 47, the sub valve element 17 and the plunger 37 are adapted to vertically move at the same time in a state where the sub valve element 17 is urged downward. With the plunger spring 47 (or the compression force thereof), the sub valve element 17 is urged in the direction to close an in-valve release passage 16 (described later) and the bellows device 40 is held within the pressure-sensitive chamber 45 via the pushrod 46.

Further, a D-cut surface is formed in a predetermined position on the outer periphery of the plunger 37, and a gap 36 is formed between the outer periphery of the plunger 37 and the guide pipe 35.

The valve element 10 includes a stepped shaft-shaped main valve element 15 and the aforementioned sub valve element 17, which are disposed in alignment in the vertical direction (along the axis O direction).

The main valve element 15 disposed in the lower side includes, from the bottom, a main valve element portion 15a, an intermediate small-diameter portion 15d, a sliding portion 15e that is relatively long in the vertical direction (the length in the direction of the axis O), an upper small-diameter portion 15f, and a flanged latch portion 15k. The sliding portion 15e is slidaly fitted and inserted into a guide hole 19 provided in the valve body 20. Further, a release through-hole 16A, which partially forms the in-valve release passage 16, is provided in the center of the inside of the main valve element 15 in a manner penetrating therethrough in the vertical direction. The upper end (i.e., an inverted truncated cone portion) of the release through-hole 16A serves as a sub valve seat portion 23 with/from which the lower end (or the sub valve element portion) 17a of the sub valve element 17 is adapted to be moved into contact or away.

When the plunger 37 is moved upward, the flanged latch portion 15k is latched to an inner flanged latch portion 37k provided at the bottom of the plunger 37, and thus latching of the main valve element 15 is achieved.

The lower end (i.e., a flat face) of the sub valve element 17 serves as a sub valve element portion 17a, which is adapted to be moved into contact with or away from the sub valve seat portion 23 as the upper end edge of the release through-hole 16A and to open or close the in-valve release passage 16. The sub valve seat portion 23 and the sub valve element portion 17a form a sub valve unit 12.

Meanwhile, the valve body 20 has a two-component configuration including a body member 20A having a fit recess hole 20C in the center of the upper portion thereof and an internal-fitting member 20B that is securely inserted into the recess hole 20C by press fitting, for example.

The internal-fitting member 20B is provided with a projecting stopper portion 24A for defining the lowest position of the plunger 37, so as to protrude above a fit-inserted portion 24 which is fitted and inserted into the recess hole 20C. The fit-inserted portion 24 is formed with steps and includes an upper large-diameter portion 24a and a lower small-diameter portion 24b, which is vertically longer than the upper large-diameter portion 24a, below the upper large-diameter portion 24a. The lower end of the lower small-diameter portion 24b includes a flanged abutting portion 24c which is caused to abut a step portion (i.e., a terrace face) between the recess hole 20C and a housing hole 18 of the body member 20A. The guide hole 19, through which the sliding portion 15e of the main valve element 15 is slidably fitted and inserted, is formed in the center of the internal-fitting member 20B in a manner penetrating therethrough in the vertical direction. The lower end of the guide hole 19 serves as the valve orifice 22 (i.e., a valve seat portion) that is opened or closed by the main valve element portion 15a of the main valve element 15. The main valve element portion 15a and the valve orifice 22 form a main valve unit 11.

In a state where the internal-fitting member 20B (or the fit-inserted portion 24 thereof) is inserted into the recess hole 20C of the body member 20A, the Ps inlet/outlet chamber 28 for the suction pressure Ps in the compressor is formed on the outer periphery of the stopper portion 24A, and a plurality of Ps inlet/outlet ports 27 are formed on the outer periphery side of the Ps inlet/outlet chamber 28. The suction pressure Ps introduced into the Ps inlet/outlet chamber 28 through the Ps inlet/outlet ports 27 is introduced into the pressure-sensitive chamber 45 via the gap 36 formed between the outer periphery of the plunger 37 and the guide pipe 35, and the like.

In addition, the housing hole 18 for housing the main valve element portion 15A of the main valve element 15 is provided continuously with the stepped lower portion of the recess hole 20C of the body member 20A, and a valve-closing spring 50, which is a conical compression coil spring, is provided in a compressed state between a step portion provided on the inner periphery of the housing hole 18 and a step portion (i.e., a terrace face) provided on the outer periphery of the lower portion of the main valve element 15. With the urging force of the valve-closing spring 50, the main valve element 15 is urged against the plunger 37 (or the bottom thereof).

In addition, the inside of the housing hole 18 (i.e., the portion below the valve orifice 22 of the internal-fitting member 20B) is a valve chamber 21. A plurality of Pd introduction ports 25 communicating with the discharge chamber of the compressor are provided below the recess hole 20C. A ring-like filter member 25A is disposed around the outer periphery of the Pd introduction ports 25, and a plurality of horizontal holes 25s communicating with the Pd introduction ports 25 are provided in the lower small-diameter portion 24b of the fit-inserted portion 24.

In addition, a lid-like member 48, which functions as a filter, is securely attached to the lower end of the body member 20A by engagement or press fitting, for example. A Pc inlet/outlet chamber (i.e., inlet/outlet port) 26 communicating with a crank chamber of the compressor is located above the lid-like member 48 and below the housing hole 18. The Pc inlet/outlet chamber (i.e., inlet/outlet port) 26 is adapted to communicate with the Pd introduction ports 25 via the valve chamber 21 → the gap between the valve orifice 22 and the main valve element portion 15a → the gap between the lower portion of the guide hole 19 and the intermediate small-diameter portion 15d, and the like.

In the illustrated example, the release through-hole 16A formed in the main valve element 15, the inside of the plunger 37, the Ps inlet/outlet chamber 28, and the like form the in-valve release passage 16 for releasing the pressure Pc in the crank chamber to the suction chamber of the compressor via the Ps inlet/outlet ports 27. The in-valve release passage 16 is adapted to be opened or closed as the sub valve element portion 17a of the sub valve element 17 is moved into contact with or away from the sub valve seat portion 23 that is the upper end edge of the release through-hole 16A of the main valve element 15.

In the control valve 1' with the above-described configuration, when a solenoid portion 30A of the electromagnetic actuator 30 including the coil 32, the stator 33, the attractor 34, and the like becomes supplied with current and energized, the plunger 37 is attracted by the attractor 34, and along with the movement of the plunger 37, the valve element 10 (the main valve element 15 and the sub valve element 17) is moved in the direction to close the valve so as to follow the plunger 37 with the urging force of the valve-closing spring 50. Meanwhile, the suction pressure Ps introduced into the Ps inlet/outlet ports 27 from the compressor is introduced into the pressure-sensitive chamber 45 through the Ps inlet/outlet chamber 28 via the gap 36 between the plunger 37 and the guide pipe 35 disposed on the outer periphery of the plunger 37 and the like. The bellows device 40 is expansively or contractively displaced in accordance with the pressure (i.e., suction pressure Ps) in the pressure-sensitive chamber 45 (contracts if the suction pressure Ps is high and expands if it is low), and the displacement (i.e., urging force) is then transmitted to the valve element 10 (the main valve element 15 and the sub valve element 17) via the pushrod 46, whereby the valve element 10 (the main valve element 15 and the sub valve element 17) is moved upward or downward relative to the valve orifice 22 so that the valve opening degree is regulated. In other words, the valve opening degree is determined based on the attraction force of the attractor 34 acting on the plunger 37, the urging force by the expansive or contractive displacement of the bellows device 40, and the urging forces by the valve-opening spring (i.e., plunger spring) 47 and the valve-closing spring 50, and according to the valve opening degree, the pressure Pc in the crank chamber is controlled.

In addition, when the plunger 37 is continuously moved upward from the lowest position with the attraction force of the electromagnetic actuator 30, the sub valve element 17 moves upward together with the plunger 37 while closing the in-valve release passage 16, and the main valve element 15 is also moved upward so as to follow the sub valve element 17. Then, after the valve orifice 22 is closed by the main valve element 15, if the plunger 37 is further moved upward, the sub valve element 17 opens the in-valve release passage 16.

### Citation List

### Patent Literature

Patent Literature 1: JP 2018-3882 A
Patent Literature 2: JP 5553514 B

### Summary of Invention

### Technical Problem

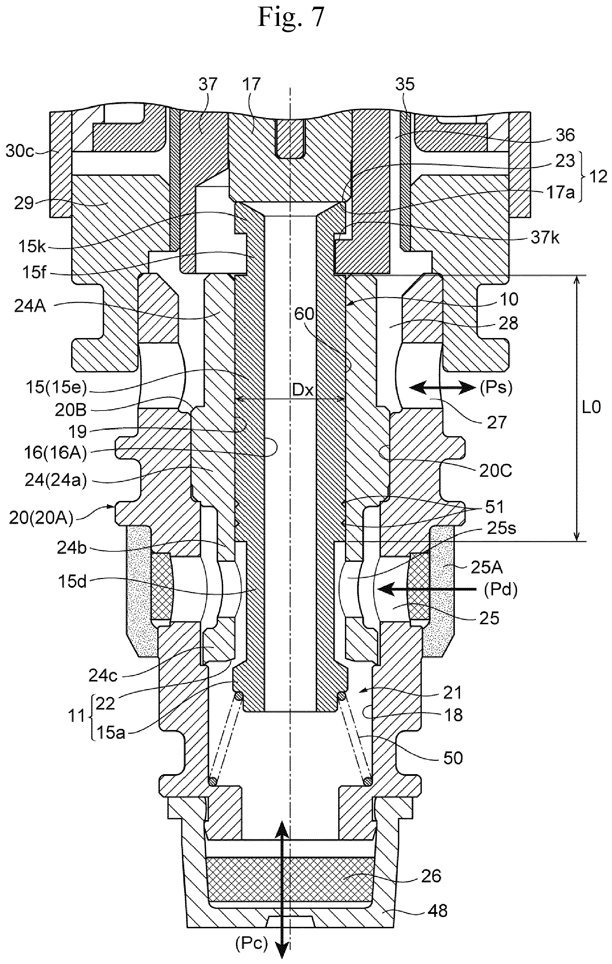

In the above-described control valve 1', as illustrated in the enlarged view of Fig. 7, the sliding portion 15e of the main valve element 15 is slidably fitted and inserted into the guide hole 19 provided in the valve body 20 (or the internal-fitting member 20B thereof). The sliding portion 15e has a columnar shape with a diameter Dx that is slightly smaller than the hole diameter of the guide hole 19, and has a length L0 that extends from the vicinity of the upper end of the guide hole 19 to the portion near the Pd introduction ports 25. The lower portion of the sliding portion 15e includes two annular grooves 51 for capturing foreign matter, which are conventionally known.

Important factors in the control valve 1' described in the aforementioned Patent Literature 1, 2, for example, are the length of the sliding portion 15e and the size of a clearance (i.e., sliding-surface gap) formed between the sliding portion 15e (or the outer peripheral surface thereof) and the guide hole 19 (or the inner peripheral surface thereof). It should be noted that the sliding portion 15e of the conventional control valve 1' illustrated in Fig. 7 (i.e., the portion having the columnar shape with the diameter Dx and the length L0) is entirely referred to as a small-clearance portion 60 having a small clearance (i.e., sliding-surface gap), when it is compared with the embodiments of the present invention which will be described later.

More specifically, in the conventional control valve 1', a pressure difference is generated between the upper and lower sides of the guide hole 19 (i.e., the upper side of the guide hole 19 is a low-pressure (Ps) side, the lower side of the guide hole 19 is a high-pressure (Pd) side), and thus the conventional control valve 1' may have a phenomenon in which a refrigerant leaks from the high-pressure (Pd) side to the low-pressure (Ps) side through the clearance (i.e., sliding-surface gap). Such leakage (this may be called Pd-Ps leakage) may reduce the performance, and thus there is a need for preventing such a phenomenon as much as possible.

Therefore, from a perspective on preventing the Pd-Ps leakage, there is a need to minimize the clearance, and further to increase the length of the sliding portion 15e.

In addition, even when the clearance is small, if the sliding portion 15e has a small length, the main valve element 15 may tend to be inclined, leading to unstable operation. Thus, the sliding portion 15e needs to have a length equal to or larger than a predetermined length.

However, the sliding resistance increases as the clearance becomes smaller or as the sliding portion 15e becomes longer, leading to lower controllability and lower operation stability. Furthermore, once foreign matter enters into the clearance (i.e., sliding-surface gap) portion, the foreign matter will hardly be released and the clearance portion may be clogged with the foreign matter. This may cause operation failures or troubles such that the valve may become locked or the valve element may become left.

The present invention has been made in view of the foregoing, and it is an object of the present invention to provide a variable-capacity compressor control valve that can effectively reduce the sliding resistance while preventing the Pd-Ps leakage and the inclination of the valve element, thus increasing controllability and operation stability, and can also avoid operation failures or troubles caused by foreign matter.

### Solution to Problem

To achieve the aforementioned objects, a variable-capacity compressor control valve according to the present invention basically includes: a valve body including a valve chamber with a valve orifice, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; a valve element for opening or closing the valve orifice; an electromagnetic actuator adapted to move the valve element in a direction to open or close the valve orifice; a pressure-sensitive chamber adapted to receive a suction pressure Ps from the compressor via the Ps inlet/outlet port; and a pressure-sensitive reaction member adapted to urge the valve element in the direction to open or close the valve orifice in accordance with a pressure in the pressure-sensitive chamber, in which a sliding portion of the valve element is slidaly fitted and inserted into a guide hole provided in the valve body, the sliding portion including small-clearance portions in opposite ends in an axial direction thereof and one or more large-clearance portions between the small-clearance portions in the opposite ends, the small-clearance portions each having a diameter Dx and an axial length that is equal to or larger than a predetermined length, the one or more large-clearance portions each having a diameter Dy that is smaller than the Dx and an axial length of 1 mm or larger.

In a preferable aspect, when a plurality of the large-clearance portions are separately provided between the small-clearance portions in the opposite ends, an intermediate small-clearance portion is provided between the large-clearance portions, the intermediate small-clearance portion having the diameter Dx and an axial length that is equal to or larger than a predetermined length.

In another preferable aspect, of the small-clearance portions in the opposite ends, the small-clearance portion on a low-pressure side has an axial length that is smaller than an axial length of the small-clearance portion on a high-pressure side.

In still another preferable aspect, a sum of axial lengths of the one or more large-clearance portions is equal to or larger than 1/3 of a total length of the sliding portion.

In still another preferable aspect, of the small-clearance portions in the opposite ends, the small-clearance portion on a low-pressure side has a discharge groove for discharging foreign matter accumulated in the one or more large-clearance portions to a low-pressure side.

In further preferable aspect, the discharge groove includes one or more vertical grooves or helical grooves.

In another preferable aspect, of the small-clearance portions in the opposite ends, the small-clearance portion on a high-pressure side has an annular groove for capturing foreign matter, the annular groove having a width of 0.5 mm or smaller.

### Advantageous Effects of Invention

In the control valve according to the present invention, the sliding portion includes, in its opposite (upper and lower) ends in the axial direction, small-clearance portions, which slide into contact with the inner peripheral surface of the guide hole, and a large-clearance portion, which does not slide into contact with the inner peripheral surface of the guide hole, between the small-clearance portions. Thus, the sliding area is smaller than that of the conventional control valve, in which the sliding portion does not include a large-clearance portion, and the control valve according to the present invention can reduce the sliding resistance.

In addition, since the sliding portion has a total length L0 that is equal to that of the conventional control valve and includes, in its opposite (upper and lower) ends in the axial direction, the small-clearance portions, which clearances at its opposite (upper and lower) ends in the axial direction are equal to those of the conventional control valve, the control valve according to the present invention can prevent the increase in the amount of Pd-Ps leakage and prevent the inclination of the valve element as in the conventional control valve.

In addition, since the clearance formed in the large-clearance portion is set significantly larger than the size of the foreign matter, even when the foreign matter enters into the large-clearance portion through the small-clearance portion, the clearance will not be clogged with the foreign matter when accumulated.

In view of the above, the control valve according to the present invention can effectively reduce the sliding resistance while preventing the Pd-Ps leakage and the inclination of the valve element, thus increasing controllability and operation stability, and can also avoid operation failures or troubles caused by foreign matter.

### Brief Description of Drawings

Fig. 1 is a general vertical cross-sectional view of a first embodiment of the variable-capacity compressor control valve according to the present invention.
Fig. 2 is an enlarged vertical cross-sectional view of a main part of the first embodiment of the variable-capacity compressor control valve according to the present invention.
Fig. 3 is an enlarged vertical cross-sectional view of a main part of a second embodiment of the variable-capacity compressor control valve according to the present invention.
Fig. 4 is an enlarged vertical cross-sectional view of a main part of a third embodiment of the variable-capacity compressor control valve according to the present invention.
Fig. 5A is an enlarged side view showing an upper portion of a main valve element, for explaining modifications of the embodiments of the variable-capacity compressor control valve according to the present invention.
Fig. 5B is an enlarged side view showing an upper portion of a main valve element, for explaining modifications of the embodiments of the variable-capacity compressor control valve according to the present invention.
Fig. 6 is a general vertical cross-sectional view of an example of a conventional variable-capacity compressor control valve.
Fig. 7 is an enlarged vertical cross-sectional view of a main part of the control valve illustrated in Fig. 6.

### Description of Embodiments

Hereinafter, embodiments of the present invention will be described with reference to the drawings.

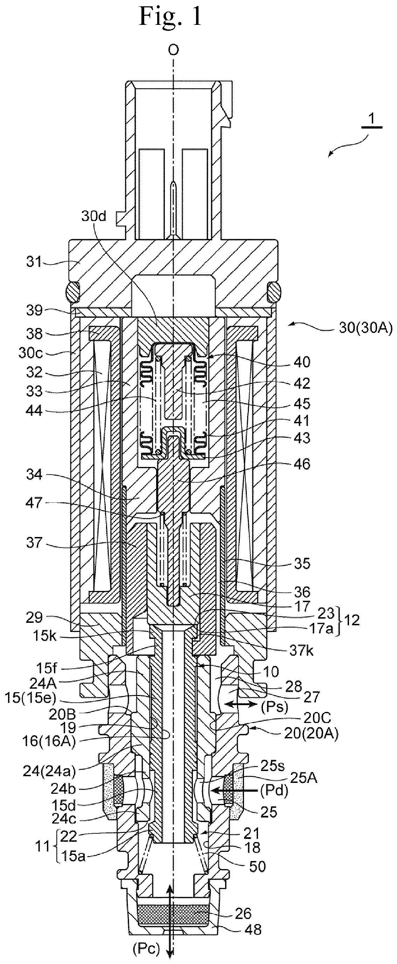

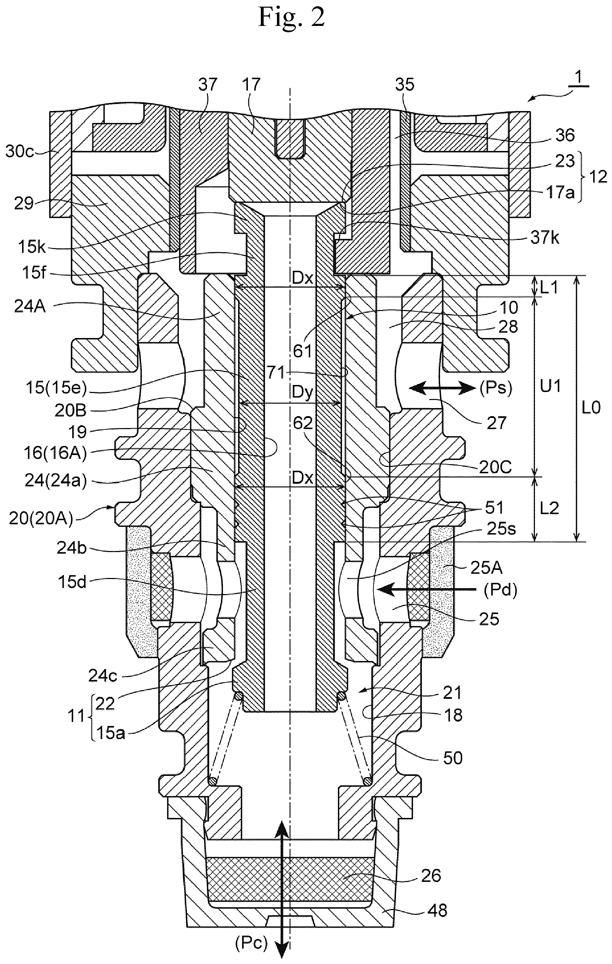

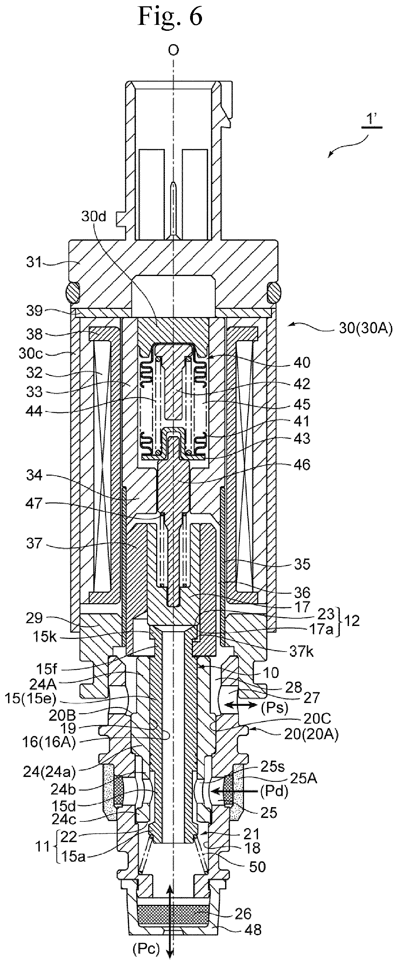

Fig. 1 is a general vertical cross-sectional view of a first embodiment of the variable-capacity compressor control valve according to the present invention. Fig. 2, Fig. 3, and Fig. 4 are enlarged cross-sectional views of main parts of the first, second, and third embodiments of the variable-capacity compressor control valve according to the present invention, respectively. The general configuration of the first, second, and third embodiments (i.e., the configuration of the valve body 20, the electromagnetic actuator 30, the bellows device 40, etc.) (see Fig. 1) is basically the same as that of the conventional control valve 1', which has been described with reference to Fig. 6 and Fig. 7. Therefore, the corresponding portions are denoted by the same reference numerals, and the repeated description will be omitted. The following discusses the differences from the conventional control valve 1' for each of the embodiments, that is, the characteristic portions of the embodiments of the present invention.

It should be noted that the detailed general configuration and the operations of each of the first, second, and third embodiments are described in detail in the aforementioned Patent Literature 1 (with a sub valve element) or Patent Literature 2 (without a sub valve element). Thus, their descriptions are cited by reference and will replace the disclosure in this specification.

It should be noted that in the present specification, descriptions indicating the positions or directions, such as upper, lower, top, bottom, left, right, front, and rear, are used for the sake of convenience in accordance with the drawings to avoid complexity in the description, but such descriptions do not necessarily indicate the actual positions or directions when the control valve of the present invention is incorporated into a compressor.

In addition, in each drawing, a gap formed between some members, a clearance between some members, and the like may be depicted larger or smaller than their actual dimensions to help understand the invention and also for the sake of convenience to create the drawing.

### [First embodiment]

In a control valve 1 of the first embodiment illustrated in Fig. 1 and Fig. 2, the sliding portion 15e of the main valve element 15, which is slidably fitted and inserted into the guide hole 19 provided in the valve body 20 (or the internal-fitting member 20B thereof), includes an upper small-clearance portion 61 in its upper end and a lower small-clearance portion 62 in its lower end, in which the upper small-clearance portion 61 has a diameter Dx and a vertical length L1, and the portion of the lower small-clearance portion 62 except two annular grooves 51 each having a width of 0.5 mm or smaller has a diameter Dx and a vertical length L2. The sliding portion 15e of the main valve element 15 includes a large-clearance portion 71 between the upper small-clearance portion 61 and the lower small-clearance portion 62, in which the large-clearance portion 71 has a diameter Dy that is smaller than the Dx.

The diameter Dx of the upper small-clearance portion 61 and the lower small-clearance portion 62 is equal to the diameter of the sliding portion 15e of the conventional control valve 1', which has been described with reference to Fig. 6 and Fig. 7. Only the upper small-clearance portion 61 and the lower small-clearance portion 62 slide into contact with the inner peripheral surface of the guide hole 19, and the large-clearance portion 71 having a diameter Dy smaller than the Dx does not slide into contact with the inner peripheral surface of the guide hole 19.

Further, a gap between the large-clearance portion 71 (or the outer peripheral surface of the sliding portion 15e in the large-clearance portion 71) and the inner peripheral surface of the guide hole 19 has a size significantly larger than the size of foreign matter that passes through a filter member 25A, for example (in other words, not smaller than the mesh size of the filter member 25A). Thus, even when the foreign matter enters into the large-clearance portion 71 through the lower small-clearance portion 62, the gap will not be clogged with the foreign matter when accumulated.

The vertical length U1 of the large-clearance portion 71 is set to 1 mm or larger, and in this example, about 2/3 of the total length L0 of the sliding portion 15e.

Further, the upper side of the guide hole 19 is a low-pressure side (adjacent to the Ps inlet/outlet chamber 28, the Ps inlet/outlet ports 27, the plunger 37), and the lower side of the guide hole 19 is a high-pressure side (adjacent to the Pd introduction ports 25, the valve orifice 22), and the vertical length L1 of the upper small-clearance portion 61 on the low-pressure side is smaller than the vertical length L2 of the lower small-clearance portion 62 on the high-pressure side. The sum of the vertical length L1 of the upper small-clearance portion 61 and the vertical length L2 of the lower small-clearance portion 62 is 1/4 to 1/3 of the total length L0 of the sliding portion 15e in this example.

In the control valve 1 of the present embodiment with the above-described configuration, the sliding portion 15e includes, in its upper and lower ends respectively, the upper small-clearance portion 61 and the lower small-clearance portion 62, which slide into contact with the inner peripheral surface of the guide hole 19, and the large-clearance portion 71, which does not slide into contact with the inner peripheral surface of the guide hole 19, between the upper small-clearance portion 61 and the lower small-clearance portion 62. Thus, the sliding area is smaller than that of the conventional control valve 1', in which the sliding portion 15e does not include a large-clearance portion, and the control valve 1 of the present embodiment can reduce the sliding resistance.

In addition, since the sliding portion 15e has the total length L0 that is equal to that of the conventional control valve and includes, in its upper and lower ends, the small-clearance portions (i.e., the upper small-clearance portion 61, the lower small-clearance portion 62), which clearances at its upper and lower ends are equal to those of the conventional control valve, the control valve 1 of the present embodiment can prevent the increase in the amount of Pd-Ps leakage and prevent the inclination of the main valve element 15 as in the conventional control valve.

In addition, since the clearance formed in the large-clearance portion 71 is set significantly larger than the size of the foreign matter, even when the foreign matter enters into the large-clearance portion 71 through the lower small-clearance portion 62, the clearance will not be clogged with the foreign matter when accumulated.

In view of the above, the control valve 1 of the present embodiment can effectively reduce the sliding resistance while preventing the Pd-Ps leakage and the inclination of the valve element, thus increasing controllability and operation stability, and can also avoid operation failures or troubles caused by foreign matter.

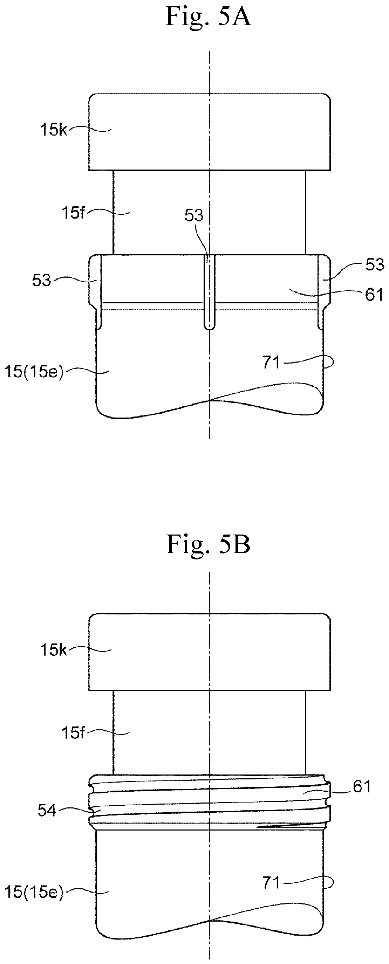

It should be noted that the following countermeasures may be taken in order to further avoid operation failures or troubles caused by foreign matter. Specifically, as illustrated in Fig. 5A, the upper small-clearance portion 61 may include one or more vertical grooves 53 each having a width of 0.5 mm or smaller as a discharge groove for discharging foreign matter accumulated in the large-clearance portion 71 to the low-pressure side (adjacent to the Ps inlet/outlet chamber 28, the Ps inlet/outlet ports 27, the plunger 37). Furthermore, as illustrated in Fig. 5B, the upper small-clearance portion 61 may include one or more helical grooves 54 each having a width of 0.5 mm or smaller as a discharge groove for discharging foreign matter accumulated in the large-clearance portion 71 to the low-pressure side (adjacent to the Ps inlet/outlet chamber 28, the Ps inlet/outlet ports 27, the plunger 37).

### [Second embodiment]

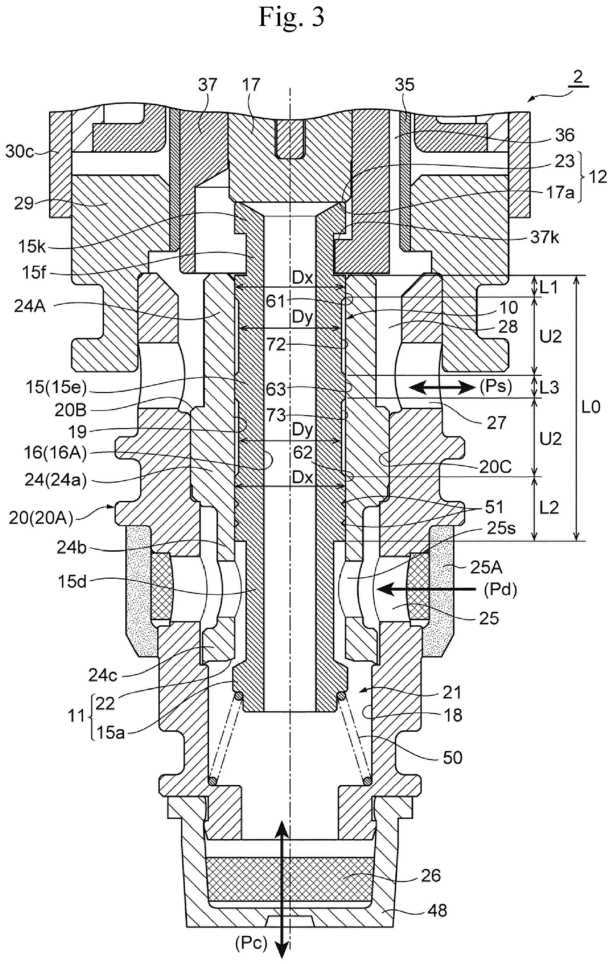

As in the first embodiment, in a control valve 2 of the second embodiment illustrated in Fig. 3, the sliding portion 15e of the main valve element 15 includes an upper small-clearance portion 61 in its upper end and a lower small-clearance portion 62 in its lower end, in which the upper small-clearance portion 61 has a diameter Dx and a vertical length L1, and the portion of the lower small-clearance portion 62 except two annular grooves 51 each having a width of 0.5 mm or smaller has a diameter Dx and a vertical length L2. Further, the sliding portion 15e of the main valve element 15 includes a large-clearance portion 72, an intermediate small-clearance portion 63, and a large-clearance portion 73 between the upper small-clearance portion 61 and the lower small-clearance portion 62, in which the large-clearance portion 72 has a diameter Dy that is smaller than the Dx, the intermediate small-clearance portion 63 has the diameter Dx that is equal to those of the upper small-clearance portion 61 and the lower small-clearance portion 62 and a vertical length L3, and the large-clearance portion 73 has the diameter Dy that is equal to that of the large-clearance portion 72.

In other words, in the present embodiment, the two separate large-clearance portions 72, 73 each having a diameter Dy that is smaller than the Dx and a vertical length U2 (1 mm or larger) are provided between the upper small-clearance portion 61 and the lower small-clearance portion 62, and the intermediate small-clearance portion 63 having the diameter Dx and a vertical length L3 is provided between the two large-clearance portions 72, 73.

In this example, the sum of the vertical lengths (U2×2) of the two large-clearance portions 72, 73 is 1/2 to 3/5 of the total length L0 of the sliding portion 15e, and in this example, the sum of the vertical length L1 of the upper small-clearance portion 61, the vertical length L2 of the lower small-clearance portion 62, and the vertical length L3 of the intermediate small-clearance portion 63 is 2/5 to 1/2 of the total length L0 of the sliding portion 15e.

It should be noted that the diameter of the intermediate small-clearance portion 63 may not be equal to the diameter of the upper small-clearance portion 61 and the lower small-clearance portion 62. Further, the two large-clearance portions 72, 73 may not have the same diameter. Further, it is needless to mention that the vertical length L1 of the upper small-clearance portion 61, the vertical length L2 of the lower small-clearance portion 62, the vertical length L3 of the intermediate small-clearance portion 63, and the vertical length U2 of the large-clearance portions 72, 73 may not be limited to the illustrated examples. It is also needless to mention that the two large-clearance portions 72, 73 may not have the same vertical length.

Also in the control valve 2 of the present embodiment with the above-described configuration, an operational advantage that is substantially equal to that in the first embodiment may be produced. Also in the second embodiment, the sum of the vertical lengths (U2×2) of the two large-clearance portions 72, 73 is equal to or larger than 1/3 of the total length L0 of the sliding portion 15e, but is smaller than the vertical length U1 of the large-clearance portion 71 of the first embodiment. The sum of the vertical lengths of the small-clearance portions is set larger due to the intermediate small-clearance portion 63. Therefore, the sliding resistance is slightly higher than that of the first embodiment, but the amount of Pd-Ps leakage can be slightly reduced in the control valve 2 of the present embodiment.

### [Third embodiment]

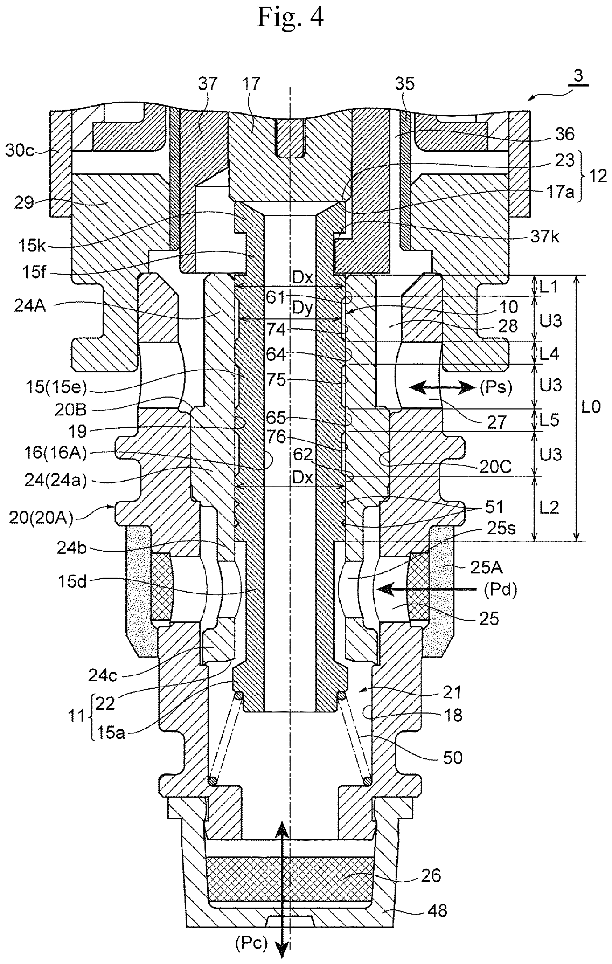

As in the first and second embodiments, in a control valve 3 of the third embodiment illustrated in Fig. 4, the sliding portion 15e of the main valve element 15 includes an upper small-clearance portion 61 in its upper end and a lower small-clearance portion 62 in its lower end, in which the upper small-clearance portion 61 has a diameter Dx and a vertical length L1, and the portion of the lower small-clearance portion 62 except two annular grooves 51 each having a width of 0.5 mm or smaller has a diameter Dx and a vertical length L2. Further, the sliding portion 15e of the main valve element 15 includes three separate large-clearance portions 74, 75, 76, each having a diameter Dy that is smaller than the Dx and a vertical length U3 (1 mm or larger), between the upper small-clearance portion 61 and the lower small-clearance portion 62. Also, the sliding portion 15e of the main valve element 15 includes intermediate small-clearance portions 64, 65 between the large-clearance portions 74 to 75 and the large-clearance portions 75 to 76, respectively, the intermediate small-clearance portions 64, 65 each having the diameter Dx that is equal to those of the upper small-clearance portion 61, the lower small-clearance portion 62, and the intermediate small-clearance portion 63 and having vertical lengths L4, L5, respectively.

In this example, the sum of the vertical lengths (U3×3) of the three large-clearance portions 74, 75, 76 is about 1/2 of the total length L0 of the sliding portion 15e, and in this example, the sum of the vertical length L1 of the upper small-clearance portion 61, the vertical length L2 of the lower small-clearance portion 62, and the vertical lengths L4, L5 of the intermediate small-clearance portions 64, 65 is 1/3 to 1/2 of the total length L0 of the sliding portion 15e.

It should be noted that it is needless to mention that the diameter of the intermediate small-clearance portions 64, 65, the diameter of the three large-clearance portions 74, 75, 76, the vertical length L1 of the upper small-clearance portion 61, the vertical length L2 of the lower small-clearance portion 62, the vertical lengths L4, L5 of the intermediate small-clearance portions 64, 65, and the vertical length U3 of the large-clearance portions 74, 75, 76 are not limited to the illustrated examples.

Also in the control valve 3 of the present embodiment with the above-described configuration, an operational advantage that is substantially equal to those in the first and second embodiments may be produced. Also in the third embodiment, the sum of the vertical lengths (U3×3) of the three large-clearance portions 74, 75, 76 is equal to or larger than 1/3 of the total length of the sliding portion 15e, but is smaller than the vertical length of the large-clearance portion of the first and second embodiments. Further, the sum of the vertical lengths of the small-clearance portions is set larger due to the intermediate small-clearance portions 64, 65. Therefore, the sliding resistance is slightly higher than that of the first and second embodiments, but the amount of Pd-Ps leakage can be slightly reduced in the control valve 3 of the present embodiment.

### Reference Signs List

- 1: Variable-capacity compressor control valve (first embodiment)
- 2: Variable-capacity compressor control valve (second embodiment)
- 3: Variable-capacity compressor control valve (third embodiment)
- 10: Valve body
- 11: Main valve unit
- 12: Sub valve unit
- 15: Main valve element
- 15e: Sliding portion
- 16: In-valve release passage
- 16A: Release through-hole
- 17: Sub valve element
- 19: Guide hole
- 20: Valve body
- 20A: Body member
- 20B: Internal-fitting member
- 22: Valve orifice
- 25: Pd introduction port
- 26: Pc inlet/outlet chamber (inlet/outlet port)
- 27: Ps inlet/outlet port
- 28: Ps inlet/outlet chamber
- 30: Electromagnetic actuator
- 32: Coil
- 37: Plunger
- 40: Bellows device (pressure-sensitive reaction member)
- 45: Pressure-sensitive chamber
- 46: Pushrod
- 47: Plunger spring (valve-opening spring)
- 50: Valve-closing spring
- 51: Annular groove for capturing foreign matter
- 53: Vertical groove (discharge groove) for discharging foreign matter
- 54: Helical groove (discharge groove) for discharging foreign matter
- 61: Upper small-clearance portion
- 62: Lower small-clearance portion
- 63 to 65: Intermediate small-clearance portion
- 71 to 76: Large-clearance portion

## Claims

1. A variable-capacity compressor control valve, comprising:
a valve body including a valve chamber with a valve orifice, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor;
a valve element for opening or closing the valve orifice;
an electromagnetic actuator adapted to move the valve element in a direction to open or close the valve orifice;
a pressure-sensitive chamber adapted to receive a suction pressure Ps from the compressor via the Ps inlet/outlet port; and
a pressure-sensitive reaction member adapted to urge the valve element in the direction to open or close the valve orifice in accordance with a pressure in the pressure-sensitive chamber,
wherein a sliding portion of the valve element is slidaly fitted and inserted into a guide hole provided in the valve body, the sliding portion including small-clearance portions in opposite ends in an axial direction thereof and one or more large-clearance portions between the small-clearance portions in the opposite ends, the small-clearance portions each having a diameter Dx and an axial length that is equal to or larger than a predetermined length, the one or more large-clearance portions each having a diameter Dy that is smaller than the Dx and an axial length of 1 mm or larger.

2. The variable-capacity compressor control valve according to claim 1, wherein when a plurality of the large-clearance portions are separately provided between the small-clearance portions in the opposite ends, an intermediate small-clearance portion is provided between the large-clearance portions, the intermediate small-clearance portion having the diameter Dx and an axial length that is equal to or larger than a predetermined length.

3. The variable-capacity compressor control valve according to claim 1 or 2, wherein of the small-clearance portions in the opposite ends, the small-clearance portion on a low-pressure side has an axial length that is smaller than an axial length of the small-clearance portion on a high-pressure side.

4. The variable-capacity compressor control valve according to any one of claims 1 to 3, wherein a sum of axial lengths of the one or more large-clearance portions is equal to or larger than 1/3 of a total length of the sliding portion.

5. The variable-capacity compressor control valve according to any one of claims 1 to 4, wherein of the small-clearance portions in the opposite ends, the small-clearance portion on a low-pressure side has a discharge groove for discharging foreign matter accumulated in the one or more large-clearance portions to a low-pressure side.

6. The variable-capacity compressor control valve according to claim 5, wherein the discharge groove includes one or more vertical grooves or helical grooves.

7. The variable-capacity compressor control valve according to any one of claims 1 to 6, wherein of the small-clearance portions in the opposite ends, the small-clearance portion on a high-pressure side has an annular groove for capturing foreign matter, the annular groove having a width of 0.5 mm or smaller.
